# NEUE EUROPÄISCHE PATENTSCHRIFT

(11) **EP 1 194 468 B2**
(45) Veröffentlichungstag und Bekanntmachung des Hinweises auf die Entscheidung über den Einspruch: **26.01.2011**
(45) Hinweis auf die Patenterteilung: 15.09.2004
(21) Anmeldenummer: 00940318.9
(22) Anmeldetag: 06.06.2000
(51) Int. Cl.: C08G 18/48

(54) **AUS POLYETHERPOLYOLEN HERGESTELLTE POLYURETHAN-WEICHSCHÄUME**
HIGH-RESILIENT POLYURETHANE FOAMS PRODUCED FROM POLYETHER POLYOLS
MOUSSES SOUPLES POLYURETHANNE FABRIQUEES A PARTIR DE POLYETHER-POLYOLS

(30) Priorität: 19.06.1999 DE 19928156
(43) Veröffentlichungstag der Anmeldung: 10.04.2002
(73) Patentinhaber: Bayer MaterialScience AG, 51368 Leverkusen (DE)
(72) Erfinder: HOFMANN, Jörg, D-47829 Krefeld (DE); GUPTA, Pramod, D-50181 Bedburg (DE); DIETRICH, Manfred, D-51373 Leverkusen (DE); RABE, Hansjürgen, D-51381 Leverkusen (DE); GRÖNEN, Jürgen, D-51491 Overath (DE); OOMS, Pieter, D-47800 Krefeld (DE)
(86) Internationale Anmeldenummer: PCT/EP2000/005167
(87) Internationale Veröffentlichungsnummer: WO 2000/078837

(56) Entgegenhaltungen:
- EP-A- 1 066 334
- EP-A- 1 082 372
- DE-A- 2 711 735
- US-A- 3 380 967
- US-A- 4 143 004
- US-A- 4 144 386
- US-A- 5 648 559
- US-A- 5 648 559
- US-A- 5 668 191
- US-A- 5 958 994

## Beschreibung

Die Erfindung betrifft Polyurethan-Weichschaumstoffe aus Polyisocyanaten und Polyetherpolyolen, die in Gegenwart von Doppelmetallcyanid(DMC)-Katalysatoren hergestellt wurden und mindestens einen Ethylenoxid-Propylenoxid-Mischblock aufweisen.

Als Polyurethan-Weichschaumstoffe werden Schaumstoffe bezeichnet, die einer Druckbeanspruchung einen geringen Widerstand entgegensetzen, offenzellig, luftdurchlässig und reversibel verformbar sind. Die Eigenschaften der Polyurethan-Weichschaumstoffe hängen im wesentlichen von der Struktur der zu ihrer Herstellung verwendeten Polyetherpolyole, Polyisocyanate und Additive wie Katalysatoren und Stabilisatoren ab. Was die Polyether anbelangt, so haben die Funktionalität, die Kettenlänge sowie die verwendeten Epoxide und die daraus resultierende Reaktivität der Hydroxylgruppen den größten Einfluß auf den Schaumstoffcharakter.

Die Herstellung von Polyetherpolyolen wird zum größten Teil durch basenkatalysierte Polyaddition von Alkylenoxiden an polyfunktionelle Startverbindungen, wie z. B. Alkohole, Säuren, Amine etc. durchgeführt (siehe z.B. Gum, Riese & Ulrich (Hrsg.): "Reaction Polymers", Hanser Verlag, München 1992, S.75-96). Nach Beendigung der Polyaddition wird in einem sehr aufwendigen Verfahren der Katalysator aus dem Polyetherpolyol entfernt, z. B. durch Neutralisation, Destillation und Filtration. Die langkettigen Polyether müssen besonders sorgfältig von Katalysatorresten befreit werden, da sonst bei der Verschäumung unerwünschte Nebenreaktionen wie z. B. Polyisocyanuratbildung stattfinden können. Der Restgehalt an Kalium- und Natriumionen im Polyetherpolyol beträgt nur wenige ppm. Nur Polyetherpolyole mit sehr geringem Alkalimetallgehalt eignen sich zur Herstellung von Polyurethan-Elastomeren und Polyurethan-Weichschäumen. Die basenkatalysiert hergestellten Polyetherpolyole haben außerdem den Nachteil, daß mit zunehmender Kettenlänge der Gehalt an monofunktionellen Polyethern (sog. Monoolen) stetig zunimmt und die Funktionalität abnimmt.

Um den eben erwähnten Nachteil zu umgehen, wird auf dem Gebiet der Polyurethan-Elastomere der Einsatz von Polyetherpolyolen empfohlen, die durch die Verwendung von Doppelmetallcyanid (DMC)-Katalysatoren hergestellt werden, dadurch sehr niedrige Gehalte an Allylethern (Monoolen) haben und somit eine höhere Funktionalität aufweisen. Solche Herstellungsverfahren sind seit den sechziger Jahren bekannt. (US-A 3 427 256, US-A 3 427 334, US-A 3 427 335) Der Nachteil dieser Herstellungsweise ist jedoch die sehr aufwendige und teure Entfernung der Katalysatoren.

In neueren Patentanmeldungen (z.B EP-A 700 949, EP-A 761 708. WO 97/40086, WO 98/16310, DE-A 19 745 120, DE-A 19 757 574, DE-A 19 810 269) werden hochaktive verbesserte DMC-Katalysatoren beschrieben, die auf Grund sehr hoher Aktivität in so geringen Mengen (Katalysatorkonzentration ≤ 50 ppm) eingesetzt werden können, daß eine Abtrennung des Katalysators aus dem Polyetherpolyol nicht mehr erforderlich ist. Dadurch ist im Vergleich zur konventionellen Basenkatalyse eine wirtschaftlichere Herstellung der Polyetherpolyole möglich. Diese Produkte können direkt zur Herstellung von Polyurethan-Elastomeren eingesetzt werden.

Nachteilig ist allerdings, dass konventionelle, niedermolekulare Startverbindungen wie z.B. Propylenglykol, Glyzerin und Trimethylolpropan mit DMC-Katalysatoren im allgemeinen nicht alkoxyliert werden können. Die DMC-Katalysatoren erfordern deshalb im allgemeinen den Einsatz von oligomeren propoxylierten Startverbindungen, die zuvor aus den oben genannten, niedermolekularen Startern z.B. durch konventionelle Alkali-Katalyse (meist mit KOH) und anschließende aufwendige Aufarbeitung, durch z. B. Neutralisation, Destillation und Filtration, erhalten werden.

In der Deutschen Patentanmeldung 198 17 676.7 wird ein Verfahren zur vollständig aufarbeitungsfreien Herstellung von langkettigen Polyetherpolyolen beschrieben, bei dem zunächst durch Katalyse mit Perfluoralkylsulfonaten (bevorzugt Triflaten) der Metalle der Gruppe III A des Periodensystems der Elemente (entsprechend der IUPAC-Konvention von 1970) die vorpropoxylierten Starterverbindungen erhalten werden, die anschließend ohne Katalysatorabtrennung und Aufarbeitung mittels hochaktiver DMC-Katalysatoren zu langkettigen hochmolekularen Polyetherpolyolen umgesetzt werden. Auf diesem Weg ist eine außerordentlich wirtschaftliche Herstellung langkettiger Polyetherpolyole möglich.

Nachteilig ist, dass sich Poly(oxypropylen)polyole, die durch diese hochaktiven DMC-Katalysatoren ohne eine Abtrennung des DMC-Katalysators sehr wirtschaftlich hergestellt werden können, nicht zur Herstellung von Polyurethan-Weichschäumen eignen. Der Einsatz solcher Polyetherpolyole in Weichschaumrezepturen führt zu starker Rißbildung.

Es wurde nun gefunden, daß durch den DMC-katalysierten Einbau von Ethylenoxid/Propylenoxid-Mischblöcken Polyetherpolyole erhalten werden, die sich hervorragend zur Herstellung von Polyurethan-Weichschäumen eignen. Die Mischblöcke werden entweder direkt auf die vorpropoxylierten Startverbindungen bis zum Kettenende addiert oder erst nach einem Propylenoxid-Block addiert. In beiden Fällen kann noch ein endständiger Propylenoxid-Block addiert werden.

Solche Polyetherpolyole können auch ohne die Mitverwendung von füllstofmaltigen Polyolen wie z.B. Polymerpolyolen (Styrol-Acrylnitril-Copolymerisate) oder Polyharnstoff Dispersion-Polyolen etc. und ohne modifizierte Polyisocyanate, wie z.B. Allophanat-Polyisocyanate, Biuret-Polyisocyanate, für die Herstellung von Polyurethan-Weichschäumen eingesetzt werden. Spuren von Katalysatoren zeigen hier keinen negativen Einfluß.

Gegenstand der Erfindung sind somit Polyurethan-Weichschflume aus Polyisocyanaten und langkettigen Polyetherpolyolen, die durch DMC-Katalyse ohne Abtrennung des Katalysators hergestellt werden, mindestens einen Ethylenoxid-Propylenoxid-Mischblock aufweisen und ein zahlenmittleres Molekulargewicht zwischen 700 und 50. 000 g/mol besitzen,
**dadurch gekennzeichnet, dass** zu ihrer Herstellung ein durch DMC-Katalyse hergestelltes Polyetherpolyol eingesetzt wird, an das nach einem Ethylenoxid-Propylenoxid-Mischblock (EO/PO-Mischblock) ein endständiger Propylenoxid-Block addiert wurde,
oder
**dadurch gekennzeichnet, dass** zu ihrer Herstellung ein durch DMC-Katalyse hergestelltes Polyetherpolyol eingesetzt wird, das einen terminalen EO/PO-Mischblock und einen Anteil primärer OH-Gruppen von mehr als 50 mol% aufweist.

Als Polyisocyanate kommen aliphatische, cycloaliphatische, araliphatische, aromatische und heterocyclische Polyisocyanate in Frage, wie sie in Justus Liebigs Annalen der Chemie 562 (1949) 75 beschrieben werden, beispielsweise solche der Formel

Q(NCO)ₙ

in der
- n: eine ganze Zahl von 2 bis 4, vorzugsweise 2, und
- Q: einen aliphatischen Kohlenwasserstoffrest mit 2 bis 18, vorzugsweise 6 bis 10 C-Atomen, einen cycloaliphati- schen Kohlenwasserstoffrest mit 4 bis 15, vorzugsweise 5 bis 10 C-Atomen, einen aromatischen Kohlenwasser- stoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen bedeuten.

Bevorzugt sind Polyisocyanate, wie sie in der DE-OS 2 832 253 beschrieben werden. Besonders bevorzugt eingesetzt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'und/oder 2,4'-Diphenylmethandiisocyanat ableiten.

Die Herstellung der langkettigen Polyetherpolyole, die in dem erfindungsgemäßen Verfahren eingesetzt werden, erfolgt mittels DMC-katalysierter Polyaddition von Alkylenoxiden an Starterverbindungen mit aktiven Wasserstoffatomen.

Geeignete DMC-Katalysatoren sind im Prinzip bekannt und ausführlich beschrieben im oben angeführten Stand der Technik. Bevorzugt eingesetzt werden verbesserte, hochaktive DMC-Katalysatoren, die z.B. beschrieben sind in EP-A 700 949, EP-A 761 708, WO 97/40086, WO 98/16310, DE-A 197 45 120, DE-A 197 57 574 und DE-A 19 810 269. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z. B. tert.-Butanol) noch einen Polyether mit zahlenmittlerem Molekulargewicht größer als 500 g/mol enthalten.

Als Starterverbindungen mit aktiven Wasserstoffatomen werden vorzugsweise Verbindungen mit (zahlenmittleren) Molekulargewichten von 18 bis 2.000 g/mol und 1 bis 8 Hydroxylgruppen eingesetzt. Beispielhaft seien genannt: Butanol, Ethylenglykol, Diethylenglykol, Triethylenglykol, 1,2-Propylenglykol,1,4-Butandiol, 1,6-Hexandiol, Bisphenol-A, Trimethylolpropan, Glycerin, Pentaerythrit, Sorbit, Rohrzucker, abgebaute Stärke oder Wasser.

Vorteilhafter werden solche Starterverbindungen mit aktiven Wasserstoffatomen eingesetzt, die zuvor aus den oben genannten niedermolekularen Startem hergestellt wurden und oligomere Alkoxylierungsprodukte darstellen mit (zahlenmittleren) Molekulargewichten von 200 bis 2.000 g/mol. Bevorzugt werden oligomere propoxylierte Starterverbindungen mit 1 bis 8 Hydroxylgruppen, besonders bevorzugt 2 bis 6 Hydroxylgruppen, und (zahlenmittleren) Molekulargewichten von 200 bis 2.000 g/mol eingesetzt.

Die Herstellung dieser oligomeren propoxylierten Starterverbindungen aus den niedermolekularen Startem kann z.B. durch konventionelle Alkalikatalyse (z.B. mit KOH) mit anschließender Aufarbeitung durch z.B. Neutralisation, Destillation und Filtration erfolgen, oder wie in der Deutschen Patentanmeldung 198 17 676.7 beschrieben durch Katalyse mit Perfluoralkylsulfonaten der Metalle der Gruppe III A des Periodensystems der Elemente (entsprechend der IUPAC-Konvention von 1970) ohne anschließende Katalysatorabtrennung.

Anschließend wird mit hochaktiven DMC-Katalysatoren die weitere Alkoxylierung durchgeführt. Erfindungsgemäß wird die vorpropoxylierte Starterverbindung mittels DMC-Katalyse entweder mit einem EO/PO-Mischblock im Gewichtsverhältnis von 2/98 bis 90/10 umgesetzt, oder weiter propoxyliert und danach entweder mit einem EO/ PO-Mischblock im Gewichtsverhältnis von 2/98 bis 90/10 umgesetzt, oder zuerst mit einem EO/PO-Mischblock im Gewichtsverhältnis von 2/98 bis 90/10 und am Ende nochmals mit einem PO-Block umgesetzt, oderweiter propoxyliert und danach mit einem EO/PO-Mischblock im Gewichtsverhältnis von 2/98 bis 90/10 und am Ende nochmals mit einem PO-Block umgesetzt.

Die DMC-katalysierte Alkoxylierung erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,001 bis 20 bar durchgeführt werden. Die Polyaddition kann in Substanz oder in einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols. Die Polyaddition kann kontinuierlich oder diskontinuierlich, z.B. in einem Batch- oder im Semibatchverfahren durchgeführt werden.

Die Gewichtsverhältnisse der umzusetzenden EO/PO-Mischblöcke betragen 2/98 bis 90/10, bevorzugt 5/95 bis 80/20. Die Länge der EO/PO-Mischblöcke sowie der reinen PO-Blöcke, die mittels DMC-Katalyse aufgebaut werden, beträgt jeweils 1 bis 1.000 Alkylenoxid-Einheiten, bevorzugt 2 bis 500 Alkylenoxid-Einheiten und besonders bevorzugt 3 bis 200 Alkylenoxid-Einheiten.

Besitzen die durch DMC-Katalyse hergestellten Polyetherpolyole einen terminalen EO/PO-Mischblock, so werden diese bevorzugt mit einem Ethylenoxid/Propylen-oxid-Gemisch im Gewichtsverhältnis EO:PO 40:60 bis 95:5, bevorzugt 50:50 bis 90:10, besonders bevorzugt 60:40 bis 90:10 hergestellt. Bei solchen Polyetherpolyolen beträgt der Anteil primärer OH-Gruppen mehr als 50 mol %, bevorzugt bis 95 mol%, besonders bevorzugt bis 90 mol%; der Gesamtgehalt an Oxyethylen-Einheiten im Polyetherpolyol beträgt bevorzugt > 25 Gew.-%, besonders bevorzugt > 30 Gew.-%, ganz besonders bevorzugt > 35 Gew.-%.

Die zahlenmittleren Molekulargewichte der langkettigen Polyetherpolyole, die erfindungsgemäß zur Herstellung von Polyurethan-Weichschäumen eingesetzt werden, betragen 700 bis 50.000 g/mol, bevorzugt 1.000 bis 30.000 g/mol und besonders bevorzugt 1.500 bis 20.000 g/mol.

Die Konzentration der hochaktiven DMC-Katalysatoren beträgt 5 bis 100 ppm, bevorzugt 10 bis 75ppm und besonders bevorzugt 15 bis 50 ppm, bezogen auf die Menge des herzustellenden Polyetherpolyols. Aufgrund der sehr niedrigen Katalysatorkonzentration können die Polyetherpolyole ohne Katalysatorabtrennung zur Herstellung von Polyurethan-Weichschäumen eingesetzt werden, ohne daß die Produktqualitäten nachteilig beeinflusst werden.

Neben den eben beschriebenen, durch DMC-Katalyse ohne Abtrennung des Katalysators hergestellten langkettigen Polyetherpolyolen können in der Polyolformulierung zur Herstellung der erfindungsgemäßen Polyurethan-Weichschäume weitere hydroxylgruppenhaltige Verbindungen (Polyole) eingesetzt werden. Diese an sich bekannten Polyole werden z.B. ausführlich beschrieben in Gum, Riese & Ulrich (Hrsg.): "Reaction Polymers", Hanser Verlag, München 1992, S. 66-96 und G. Oertel (Hrsg.): "Kunststoffhandbuch, Band 7, Polyurethane", Hanser Verlag, München 1993, S. 57-75. Beispiele geeigneter Polyole finden sich in den genannten Literaturstellen sowie in US-A 3 652 639, US-A 4 421 872 und US-A 4 310 632.

Bevorzugt eingesetzte Polyole sind Polyetherpolyole (insbesondere Poly(oxyalkylen)polyole) und Polyesterpolyole.

Die Herstellung der Polyetherpolyole erfolgt nach bekannten Methoden, vorzugsweise durch basenkatalysierte Polyaddition von Alkylenoxiden an polyfunktionelle, aktive Wasserstoffatome aufweisende Starterverbindungen, wie z.B. Alkohole oder Amine. Bespielhaft seien genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Wasser, Methylamin, Ethylamin, Propylamin, Butylamin, Anilin, Benzylamin, o- und p-Toluidin, α,β-Naphthylamin, Ammoniak, Ethylendiamin, Propylendiamin, 1,4-Butylendiamin, 1,2-, 1,3-, 1,4-, 1,5- und/oder 1,6-Hexamethylendiamin, o-, m-, und p-Phenylendiamin, 2,4-, 2,6-Toluylendiamin, 2,2'-, 2,4- und 4,4'-Diaminodiphenylmethan und Diethylendiamin.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann nur mit einem monomeren Epoxid durchgeführt werden, aber auch statistisch oder auch blockweise mit zwei oder drei unterschiedlichen monomeren Epoxiden erfolgen.

Verfahren zur Herstellung solcher Polyetherpolyole werden in "Kunststoffhandbuch, Band 7, Polyurethane", in "Reaction Polymers" sowie z.B. in US-A 1 922 451, US-A 2 674 619, US-A 1 922 459, US-A 3 190 927 und US-A 3 346 557 beschrieben.

Methoden zur Herstellung von Polyesterpolyolen sind ebenfalls gut bekannt und z.B. beschrieben in den beiden oben genannten Literaturstellen ("Kunststoffhandbuch, Band 7, Polyurethane", "Reaction Polymers"). Die Polyesterpolyole werden i.a. durch Polykondensation von mehrfunktionellen Carbonsäuren oder deren Derivaten, wie z.B. Säurechloriden oder -anhydriden, mit mehrfunktionellen Hydroxylverbindungen hergestellt..

Als mehrfunktionelle Carbonsäuren können beispielsweise verwendet werden: Adipinsäure, Phthalsäure, Isophthalsäure, Terephthalsäure, Oxalsäure, Bernsteinsäure, Glutarsäure, Azelainsäure, Sebacinsäure, Fumarsäure oder Maleinsäure.

Als mehrfunktionelle Hydroxylverbindungen können beispielsweise verwendet werden: Ethylenglykol, Diethylenglykol, Triethylenglykol, 1,2-Propylenglykol, Dipropylenglykol, 1,3-Butandiol, 1,4-Butandiol, 1,6-Hexandiol, 1,12-Dodecandiol, Neopentylglykol, Trimethylolpropan, Triethylolpropan oder Glycerin.

Die Herstellung der Polyesterpolyole kann weiterhin auch durch Ringöffnungspolymerisation von Lactonen (z.B. Caprolacton) mit Diolen und/oder Triolen als Starter erfolgen.

Zusätzlich kann bei der Herstellung der erfindungsgemäßen Polyurethan-Weichschäume eine Vernetzerkomponente zugesetzt werden. Als derartige Vernetzer sind z. B. Diethanolamin, Triethanolamin, Glycerin, Trimethylolpropan (TMP), Addukte von solchen Vemetzerverbindungen mit Ethylenoxid und/oder Propylenoxid mit einer OH-Zahl < 1.000 oder auch Glykole mit einem zahlenmittleren Molekulargewicht ≤ 1.000 brauchbar. Besonders bevorzugt sind Triethanolamin, Glycerin, TMP oder niedrige EO- und/oder PO-Addukte hiervon.

Weiterhin können gegebenenfalls als weitere Komponente noch an sich bekannte Hilfs-, Zusatz- und/oder Flammschutzmittel zugesetzt sein. Unter Hilfsstoffen werden dabei insbesondere an sich bekannte Katalysatoren und Stabilisatoren verstanden. Als Flammschutzmittel ist z.B. Melamin einsetzbar.

Gegebenenfalls zuzusetzende Katalysatoren sind an sich bekannt. Beispielhaft genannt seien tertiäre Amine wie Triethylamin, Tributylamin, N-Methylmorpholin, N-Ethyl-morpholin, N,N,N,N'-Tetramethylethylendiamin, Pentamethyldiethylentriamin und höhere Homologe (DE-A 2624 527 und DE-A 26 24 528), 1,4-Diaza-bicyclo-[2,2,2]octan, N-Methyl-N'-dimethylaminoethyl-piperazin, Bis(dimethylaminoalkyl)-piperazine (DE-A 26 36 787), N,N-Dimethylbenzyl-amin, N,N-Dimethylcyclohexylamin, N,N-Diethylbenzyl-amin, Bis(N,N-diethylaminoethyl)adipat, N,N,N',N'-Tetramethyl-1,3-butandiamin, N,N-Dimethyl-β-phenyl-ethyl-amin, 1,2-Dimethylimidazol, 2-Methylimidazol, monocyclische und bicyclische Amidine (DE-A 17 20 633), Bis-(dialkylamino)alkylether (US-A 3 330 782, DE-A 10 30 558, DE-A 18 04 361 und DE-A 26 18 280) sowie Amidgruppen (vorzugsweise Formamidgruppen) aufweisende tertiäre Amine gemäß DE-A 25 23 633 und DE-A 27 32 292. Als Katalysatoren kommen auch an sich bekannte Mannichbasen aus sekundären Aminen, z.B. Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenolen in Frage. Gegenüber Isocyanatgruppen aktive Wasserstoffatome aufweisende, als Katalysator einsetzbare tertiäre Amine sind z.B. Triethanolamin, Triisopropanolamin, N-Methyl-diethanolamin, N-Ethyl-diethanolamin, N,N-Dimethylethanolamin, deren Umsetzungsprodukte mit Alkylenoxiden wie Propylenoxid und/oder Ethylenoxid sowie sekundär-tertiäre Amine gemäß DE-A 27 32 292. Als Katalysatoren kommen ferner Silaamine mit Kohlenstoff-Silizium-Bindungen in Frage, wie sie z.B. in der DE-A 12 29 290 beschrieben sind, z.B. 2,2,4-Trimethyl-2-silamorpholin und 1,3-Diethyl-aminomethyltetramethyldisiloxan. Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-A 17 69 043). Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung sind in DE-A 20 62 286, DE-A 20 62 289, DE-A 21 17 576, DE-A 21 29 198, DE-A 23 30 175 und DE-A 23 30 211 beschrieben. Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinnmercaptid (DE-A 17 69 367; US-A 3 645 927) vorzugsweise Zinn(II)salze von Carbonsäuren wie Zinn(II)acetat, Zinn(II)octoat, Zinn(II)-ethylhexanoat und Zinn(II)laurat und Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen (DE-A 24 34 185, DE-A 26 01 082 und DE-A 26 03 834). Auch können als Katalysatoren sogenannte polymere Katalysatoren, wie sie in der DE-A 42 18 840 beschrieben werden, eingesetzt werden. Bei diesen Katalysatoren handelt es sich um in der Alkalisalz-Form vorliegende Umsetzungsprodukte von tri- oder höherfunktionellen Alkoholen mit (zahlenmittleren) Molekulargewichten von 92 bis 1.000 mit intramolaren Carbonsäureanhydriden. Die Umsetzungsprodukte weisen (im statistischen Mittel) mindestens 2, vorzugsweise 2 bis 5 Hydroxylgruppen und mindestens 0,5, vorzugsweise 1,0 bis 4 Carboxylatgruppen auf, wobei die Gegenionen zu den Carboxylatgruppen Alkalikationen sind. Bei den "Umsetzungsprodukten" der Ausgangskomponenten kann es sich wie aus dem Gehalt an Carboxylatgruppen ersichtlich, auch um Gemische aus echten Umsetzungsprodukten mit überschüssigen Mengen an Alkoholen handeln. Geeignete mehrwertige Alkohole zur Herstellung der Umsetzungsprodukte sind beispielsweise Glycerin, Trimethylolpropan, Sorbit, Pentaerythrit, Gemische derartiger mehrwertiger Alkohole, Alkoxylierungsprodukte Alkoholen mit (zahlenmittleren) Molekulargewichten von 92 bis 1.000 derartiger mehrwertiger Alkohole oder von Gemischen derartiger Alkohole, wobei bei der Alkoxylierung Propylenoxid und/oder Ethylenoxid in beliebiger Reihenfolge oder im Gemisch, vorzugsweise jedoch ausschließlich Propylenoxid zum Einsatz gelangen. Geeignete intramolekulare Carbonsäureanhydride zur Herstellung der Umsetzungsprodukte sind beispielsweise Maleinsäureanhydrid, Phthalsäureanhydrid, Hexahydrophthalsäureanhydrid, Bemsteinsäureanhydrid, Pyromellitsäureanhydrid oder beliebige Gemische derartiger Anhydride. Maleinsäureanhydrid wird besonders bevorzugt eingesetzt. Weitere Vertreter von zu verwendenden Katalysatoren sowie Einzelheiten über die Wirkungsweise der Katalysatoren sind im Vieweg und Höchtlen (Hrsg.): Kunststoff-Handbuch, Band VII, Carl-Hanser-Verlag, München 1966, S. 96 -102 beschrieben.

Die Katalysatoren werden in der Regel in Mengen von etwa 0,001 bis 10 Gew.-%, bezogen auf die Gesamtmenge an Verbindungen mit mindestens zwei gegenüber Isocyanaten reaktionsfähigen Wasserstoffatomen eingesetzt.

Weitere gegebenenfalls eingesetzte Zusatzstoffe sind oberflächenaktive Zusatzstoffe wie Emulgatoren und Schaumstabilisatoren. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, zum Einsatz. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in US-A 2 834 748, US-A 2 917 480 und US-A 3 629 308 beschrieben. Von besonderem Interesse sind vielfach über Allophanatgruppen verzweigte Polysiloxan-Polyoxyalkylen-Copolymere gemäß DE-A 25 58 523.

Weitere mögliche Zusatzstoffe sind Reaktionsverzögerer, z.B. sauer reagierende Stoffe wie Salzsäure oder organische Säurehalogenide, ferner an sich bekannte Zellregler wie Paraffine oder Fettalkohole oder Dimethylpolysiloxane sowie an sich bekannte Pigmente oder Farbstoffe und Flammschutzmittel, z.B. Trichlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlänunkreide.

Weitere Beispiele von gegebenenfalls erfindungsgemäß mitzuverwendenden oberflächenaktiven Zusatzstoffen und Schaumstabilisatoren sowie Zellreglem, Reaktionsverzögerem, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in Vieweg und Höchtlen (Hrsg.): Kunststoff-Handbuch, Band VII, Carl-Hanser-Verlag, München 1966, S. 103 - 113 beschrieben.

Als gegebenenfalls einzusetzende Treibmittelkomponente sind alle bei der Polyurethan-Schaumstoflherstellung bekannten Treibmittel möglich. Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittels z.B. Luft, CO₂ oder N₂O, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Besonders bevorzugt werden als Treibmittel wasserstoffhaltige Fluoralkane (HFCKW's) sowie niedere Alkane wie z. B. Butan, Pentan, Isopentan, Cyclopentan, Hexan, Iso-Hexan, gegebenenfalls in Abmischung untereinander und/oder unter Zusatz von Wasser verwendet. Weitere Beispiele für Treibmittel sowie Einzelheiten über die Verwendung, von Treibmitteln sind in Vieweg und Höchtlen (Hrsg.): Kunststoff-Handbuch, Band VII, Carl-Hanser-Verlag, München 1966, S. 108f, S. 453ff und S. 507ff beschrieben. Bevorzugt ist jedoch Wasser bzw. CO₂ das alleinige Treibmittel

Zur Durchführung des Verfahrens werden die Reaktionskomponenten nach dem an sich bekannten Einstufenverfahren, dem Prepolymerverfahren oder dem Semiprepolymerverfahren zur Umsetzung gebracht, wobei man sich vorzugsweise maschineller Einrichtungen bedient wie sie in US-PS 2 764 565 beschrieben werden. Einzelheiten über Verarbeitungseinnchtungen, die auch erfindungsgemäß infrage kommen, werden im Vieweg und Höchtlen (Hrsg.): Kunststoff-Handbuch, Band VII, Carl-Hanser-Verlag, München 1966, S. 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz in Frage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, dass das Formteil eine kompakte Haut und einen zelligen Kern aufweist. Erfindungsgemäß kann man in diesem Zusammenhang so vorgehen, dass man in die Form so viel schaumfähiges Reaktionsgemisch einträgt, daß der gebildete Schaumstoff die Form gerade ausfüllt. Man kann aber auch so arbeiten, dass man mehr schaumfähiges Reaktionsgemisch in die Form einträgt, als zur Ausfüllung des Forminneren mit Schaumstoff notwendig ist. Im letztgenannten Fall wird somit unter sog. "overcharging" gearbeitet; eine derartige Verfahrensweise ist z. B. aus US-PS 3 178 490 und US-PS 3 182 104 bekannt.

Bei der Formverschäumung werden vielfach an sich bekannte "äußere Trennmittel" wie Siliconöle mitverwendet. Man kann aber auch sogenannte "innere Trennmittel", verwenden, gegebenenfalls im Gemisch mit äußeren Trennmitteln, wie dies beispielsweise aus DE-OS 21 21 670 und DE-OS 23 07 589 hervorgeht.

Selbstverständlich können aber auch Schaumstoffe durch Blockverschäumung oder nach dem an sich bekannten Doppeltransportbandverfahren (s. "Kunststoffhandbuch", Band VII, Carl Hanser Verlag, München Wien, 3. Auflage 1993, S. 148) hergestellt werden.

Die Schaumstoffe können nach verschiedenen Verfahren der Blockschaumstoffherstellung oder aber in Formen hergestellt werden. Bei der Herstellung von Blockschaumstoffen werden in einer bevorzugten Ausführungsform der Erfindung Polyetherpolyole verwendet, die EO/PO-Mischblöcke mit einem PO-Anteil von mindestens 50 mol%, bevorzugt mindestens 60 mol% aufweisen; zusätzlich können sie auch noch terminale PO-Blöcke enthalten. Sollen sehr weiche Schäume hergestellt werden, so kommen Polyetherpolyole zum Einsatz, die EO/PO-Mischblöcke mit einem hohen Anteil an Oxyethyleneinheiten enthalten; bevorzugt weisen diese Polyole auch einen hohen Anteil primärer OH-Gruppen auf (bevorzugt mindestens 40 mol%, besonders bevorzugt mindestens 50 mol%). Dabei können diese Polyetherpolyole in Kombination mit konventionell hergestellten Polyolen mit hohem Anteil primärer OH-Gruppen verwendet werden. Zur Herstellung von Heißformschäumen werden bevorzugt Polyetherpolyole mit mindestens einem intemen EO/PO-Mischblock und terminatem PO-Block eingesetzt, zur Herstellung von Kaltformschäumen haben sich insbesondere Polyetherpolyole mit terminalem EO/PO-Mischblock und einem Anteil primärer OH-Gruppen von mehr als 50 mol% bewährt.

### Beispiele

### Herstellung des DMC-Katalysators (gemäß EP-A 700 949).

Eine Lösung von 12,5 g (91,5 mmol) Zinkchlorid in 20 ml destilliertem Wasser gibt man unter starkem Rühren (24.000 U/min) zu einer Lösung von 4 g (12 mmol) Kaliumhexacyanocobaltat in 70 ml destilliertem Wasser. Sofort danach wird eine Mischung aus 50 g tert.-Butanol und 50 g destilliertem Wasser zur gebildeten Suspension gegeben und anschließend 10 min stark gerührt (24.000 U/min). Dann wird eine Mischung aus 1 g Polypropylenglykol mit mittlerer Molmasse 2.000, 1 g tert.-Butanol und 100 g destilliertem Wasser zugegeben und 3 min gerührt (1.000 U/min). Der Feststoff wird durch eine Filtration isoliert, dann 10 min mit einer Mischung aus 70 g tert.-Butanol, 30 g destilliertem Wasser und 1 g des obigen Polyethers gerührt (10.000 U/min) und erneut filtriert. Abschließend wird noch einmal 10 min mit einer Mischung aus 100 g tert.-Butanol und 0,5 g des obigen Polyethers gerührt (10.000 U/min). Nach Filtration wird der Katalysator bei 50 °C und Normaldruck bis zur Gewichtskonstanz getrocknet.

Ausbeute an getrocknetem, pulverförmigem Katalysator: 6,23 g

Elementaranalyse und Thermogravimetrische Analyse:
Cobalt = 11,6 Gew.-%, Zink = 24,6 Gew.-%, tert.-Butanol = 3,0 Gew.%, Polyether = 25,8 Gew.-%

### Herstellung von Polyetherpolyolen

### Vergleichsbeispiel 1

In einem 10 L Druckglaskolben werden 746,7 g einer Poly(oxypropylen)triol-Startverbindung (OHZ = 431 mg KOH/g), die durch Yttriumtriflat-Katalyse (100 ppm) ohne Katalysatorabtrennung aus Glyzerin und Propylenoxid hergestellt wurde, und 0,6 g DMC-Katalysator(100 ppm, bezogen auf die Menge des herzustellenden langkettigen Polyols) unter Schutzgas (Stickstoff) vorgelegt und unter Rühren auf 105 °C aufgeheizt. Anschließend wird Propylenoxid (ca. 100 g) auf einmal zudosiert, bis der Gesamtdruck auf 1,5 bar angestiegen ist. Weiteres Propylenoxid wird erst dann wieder zudosiert, wenn ein beschleunigter Druckabfall beobachtet wird. Dieser beschleunigte Druckabfall zeigt an, daß der Katalysator aktiviert ist. Anschließend wird das restliche Propylenoxid (3.408,4 g) kontinuierlich bei einem konstanten Gesamtdruck von 1,5 bar zudosiert. Nach vollständiger Propylenoxid-Dosierung und 5 Stunden Nachreaktionszeit bei 105 °C werden in einem Mischblock 581,6 g Ethylenoxid und 1.163,2 g Propylenoxid bei Temperaturen von 100 - 110 °C zudosiert. Nach einer Nachreaktionszeit von 5 h werden flüchtige Anteile bei 105 °C (1 mbar) abdestilliert, anschließend auf Raumtemperatur abgekühlt und mit 6 g eines Antioxidanten (3,5-Di-tert.-butyl-4-hydroxytoluol, BHT) versetzt.

Das erhaltene langkettige Polyetherpolyol besitzt eine OH-Zahl von 54,7 mg KOH/g und einen Doppelbindungsgehalt von 7 mMol/kg.

### Beispiel 2

Wie Vergleichsbeispiel 1, jedoch mit 1.182,0 g Propylenoxid, einem Mischblock von 581,6 g Ethylenoxid und 2.326,5 g Propylenoxid und einem Endblock von 1.163,2 g Propylenoxid.
Das Produkt hat eine OH-Zahl von 54,4 mg KOH/g und einen Doppelbindungsgehalt von 8 mMol/kg.

### Beispiel 3

In einem 10 L Druckglaskolben werden 872,7 g einer Poly(oxypropylen)triol-Startverbindung (OHZ = 380 mg KOH/g), die durch KOH-Katalyse aus TMP und Propylenoxid hergestellt wurde und 0,3 g DMC-Katalysator (50 ppm, bezogen auf die Menge des herzustellenden langkettigen Polyols) unter Schutzgas (Stickstoff) vorgelegt und unter Rühren auf 105 °C aufgeheizt. Anschließend wird eine Mischung aus Propylenoxid (541,3 g) und Ethylenoxid (4.586,0 g) kontinuierlich bei einem konstanten Gesamtdruck von 1,5 bar zudosiert. Nach einer Nachreaktionszeit von 5 h werden flüchtige Anteile bei 105 °C (1 mbar) abdestilliert, anschließend auf Raumtemperatur abgekühlt und mit 6 g eines Antioxidanten (3,5-Di-tert.-butyl-4-hydroxy-toluol, BHT) versetzt.

Das erhaltene langkettige Polyetherpolyol besitzt eine OH-Zahl von 58,5 mg KOH/g und einen Doppelbindungsgehalt von 2 mMol/kg.

### Vergleichsbeispiel 4

Wie Beispiel 3, jedoch mit einem Mischblock von 4.614,6 g Propylenoxid und 512,7 g Ethylenoxid.

Das erhaltene langkettige Polyetherpolyol hat eine OH-Zahl von 58,1 mg KOH/g und einen Doppelbindungsgehalt von 7 mMol/kg

### Beispiel 5

Wie Beispiel 3, jedoch mit einem Mischblock von 3.589,1 g Ethylenoxid und 1.538,2 g Propylenoxid.

Das Produkt hat eine OH-Zahl von 59,1 mg KOH/g und einen Doppelbindungsgehalt von 2 mMol/kg.

### Vergleichsbeispiel 6

Wie Beispiel 3, jedoch mit einem Mischblock von 1.719,8 g Ethylenoxid und 3.407,5 g Propylenoxid.

Das Produkt hat eine OH-Zahl von 58,5 mg KOH/g und einen Doppelbindungsgehalt von 4 mMol/kg.

### Vergleichsbeispiel 7

In einem 10 L Druckglaskolben werden 746,7 g einer Poly(oxypropylen)triol-Startverbindung (OHZ = 431 mg KOH/g), die durch Yttriumtriflat-Katalyse (100 ppm) ohne Katalysatorabtrennung aus Glyzerin und Propylenoxid hergestellt wurde, und 0,6 g DMC-Katalysator (100 ppm, bezogen auf die Menge des herzustellenden langkettigen Polyols) unter Schutzgas (Stickstoff) vorgelegt und unter Rühren auf 105 °C aufgeheizt. Anschließend wird Propylenoxid (ca. 100 g) auf einmal zudosiert, bis der Gesamtdruck auf 1,5 bar angestiegen ist. Weiteres Propylenoxid wird erst dann wieder zudosiert, wenn ein beschleunigter Druckabfall beobachtet wird. Dieser beschleunigte Druckabfall zeigt an, daß der Katalysator aktiviert ist. Anschließend wird das restliche Propylenoxid (5.153,3 g) kontinuierlich bei einem konstanten Gesamtdruck von 1,5 bar zudosiert. Nach vollständiger Propylenoxid-Dosierung und 5 Stunden Nachreaktionszeit bei 105 °C werden flüchtige Anteile bei 105 °C (1 mbar) abdestilliert und anschließend auf Raumtemperatur abgekühlt.

Das erhaltene langkettige Polyetherpolyol besitzt eine OH-Zahl von 54,4 mg KOH/g und einen Doppelbindungsgehalt von 10 mMol/kg.

### Herstellung von Polyurethan-Weichschäumen

### Herstellung der Weichformschäume:

### Freischaum

### a) Kaltformschaum

Die Polyolformulierung wird gemäß Rezepturvorgabe auf einer Laborschnellwaage eingewogen. Hierbei wird der entsprechende Polyether (gegebenenfalls Polyethergemisch) in den dafür vorgesehenen laborüblichen Pappbecher gefüllt und auf 25°C temperiert. Nach kurzem Umschwenken erfolgt die Zugabe aller benötigten Zusatzmittel entsprechend den Angaben der Rezepturvorschrift. Nachdem die Polyetherformulierung auf 25°C temperiert wurde, wird die Probe für 30 sec. mit dem LM-34-Rührwerk bei maximaler Drehzahl (4.200 U/min.) zur Erzielung einer homogenen Mischung und zur Gewährleistung einer gleichmäßigen Luftbeladung gerührt. Dabei ist darauf zu achten, daß der Rührteller den Blechboden des Gefäßes nicht berührt.

Das auf 25°C temperierte Isocyanat/Isocyanatgemisch wird gemäß der Massenangabe auf einer Laborschnellwaage in einen geeigneten Becher eingewogen. Die so vorbereitete Isocyanat-Menge wird in das Reaktionsgefäß mit der Polyetherformulierung gegeben. Hierbei ist zu beachten, daß die Auslaufzeit der Isocyanat-Komponente etwa 3 sec. beträgt. Anschließend werden die Komponenten in dem Reaktionsgefäß mittels LM-34-Rührwerk bei 4200 U/Min. verrührt. Wenn das Gemisch angecremt ist (zu steigen anfängt), wird ein Teil des Reaktionsgemisches sofort in ein durch einen Holzkasten stabilisiertes Papierpäckchen überführt.
Startzeit ist der Zeitraum vom Beginn der Vermischung bis zum deutlich erkennbaren Reaktionsbeginn.
Die Abbindezeit ("Fadenziehzeit") ist ein Maß für die Polymerbildungsreaktion. Sie wird ermittelt, indem mit einem dünnen Rundholzstäbchen kurz vor dem erwarteten Abbindezeitpunkt (Erfahrungswert) wiederholt in das aufsteigende Reaktionsgemisch gestochen wird. Der Zeitraum vom Vermischungsbeginn bis zu dem Zeitpunkt, an dem beim Herausziehen an dem Rundholzstäbchen Fäden (TDI- oder TDI/MDI-Systeme) bzw. Pocken (MDI-Systeme) entstehen bzw. hängen bleiben, gilt als Abbindezeit.
Unter der Steigzeit wird die Zeitspanne zwischen Vermischungsbeginn und maximaler vertikaler Schaumausdehnung verstanden.

### b) Heißschaum

Polyether, Wasser, Aktivator u. Stabilisator werden 30 sec. lang vermischt (LM-34-Rührwerk, 4.200 U/Min.) dann wird der Vernetzer (Zinnoctoat SO) eingewogen und mit der Reaktionsmischung vermischt. Dann wird die berechnete Isocyanat-Menge in das Reaktionsgefäß mit der Polyetherformulierung gegeben. Hierbei ist zu beachten, daß die Auslaufzeit der Isocyanat-Komponente etwa 3 sec. beträgt. Anschließend werden die Komponenten in dem Reaktionsgefäß mittels LM-34-Rührwerk bei 4200 U/Min. verrührt.

Wenn das Gemisch angecremt ist (zu steigen anfängt), wird ein Teil des Reaktionsgemisches sofort in ein durch einen Holzkasten stabilisiertes Papierpäckchen überführt.
Startzeit ist der Zeitraum vom Beginn der Vermischung bis zum deutlich erkennbaren Reaktionsbeginn.
Steigzeit: Unter der Steigzeit wird die Zeitspanne zwischen Vermischungsbeginn und maximaler vertikaler Schaumausdehnung verstanden. Beim Heißschaum ist auch ein Abblasen zu beobachten.
30 sec. nach Ende der Steigzeit wird das Päckchen in einen Heizschrank bei 150°C gestellt. Verweildauer 5 Min.

### Formteil (Kaltformschaum)

Das Reaktionsgemisch wird in eine Form (Formtemperatur 50-60°C) überführt, die mit handelsüblichem Trennmittel versehen ist. Die Form wird mit einem Deckel verschlossen und in eine Presse oder Schließe eingebracht, um dem Schäumdruck entgegenzuwirken und das Werkzeug geschlossen zu halten. Nach 5 Minuten wird der Deckel entfemt und der Schaumstoff durch mechanisches Zusammendrücken (z.B. von Hand, mit Stempeln oder Walzen oder durch Druckverminderung) solange bearbeitet, bis der Schaum offenzellig ist (schrumpffrei).

### Formteil (Heißformschaum)

Das Reaktionsgemisch wird in eine Form (Formtemperatur 40-45°C) überführt, die Form wird mit einem Lochdeckel verschlossen.
30 sec. nach Ende der Steigzeit (Abblasen) wird die Form in den Heizschrank bei 150°C gestellt. Verweildauer 15 Min..
Nach dem Entformen wird die heiße Form mit Trennmittel eingesprüht (Acmos® 32-574, Acmos Chemie GmbH & Co., D-28199 Bremen).

### Vergleichsbeispiel 8

| | |
|---|---|
| 100 Gew.-Teile | des Polyethers aus Vergleichsbeispiel 7 |
| 3,0 Gew.-Teile | Wasser |
| 0,5 Gew.-Teile | Silikonstabilisator (OS® 15, Th. Goldschmidt AG, D-45127 Essen) |
| 0,1 Gew.-Teile | N,N'-Dimethylethanolamin (DMEA) |
| 0,05 Gew.-Teile | Amin-Katalysator (Niax® Al, Fa. Witco Osi) |
| 0,34 Gew.-Teile | Zinnoctoat |
| 35,6 Gew.-Teile | Toluylendiisocyanat (65 Gew.-% 2,4-Isomer, 35 Gew.-% 2,6-Isomer; Desmodur® T 65, Bayer AG) |

wurden intensiv gemischt und und zu einem Schaumstoff verschäumt. Der Block zeigte einen horizontalen Innenriß, der weder durch Variation des Zinnkatalysators (0,24 - 0,38 Gew.-Teile) noch des NCO/OH-Verhältnisses (Kennzahl 102 - 108) korrigiert werden konnte.

### Vergleichsbeispiel 9

| | |
|---|---|
| 100 Gew.-Teile | des Polyethers aus Vergleichsbeispiel 4 |
| 4,0 Gew.-Teile | Wasser |
| 0,4 Gew.-Teile | Silikonstabilisator (OS® 25, Th. Goldschmidt AG, D-45127 Essen) |
| 0,1 Gew.-Teile | DMEA |
| 0,05 Gew.-Teile | Amin-Katalysator (Niax® Al, Fa. Witco Osi) |
| 0,18 Gew.-Teile | Zinnoctoat |
| 51,2 Gew.-Teile | Toluylendiisocyanat (80 Gew.-% 2,4-Isomer, 20 Gew.-% 2,6-Isomer; Desmodur® T 80, Bayer AG) |

wurden intensiv gemischt und zu einem Schaumstoffblock verschäumt. Es resultierte ein rißfreier, offener Schaumstoff mit regelmäßiger Zellstruktur.

### Vergleichsbeispiel 10

| | |
|---|---|
| 100 Gew.-Teile | des Polyethers aus Vergleichsbeispiel 6 |
| 4,0 Gew.-Teile | Wasser |
| 0,4 Gew.-Teile | Silikonstabilisator (OS® 25, Th. Goldschmidt AG, D-45127 Essen) |
| 0,1 Gew.-Teile | DMEA |
| 0,05 Gew.-Teile | Amin-Katalysator (Niax® Al, Fa. Witco Osi) |
| 0,18 Gew.-Teile | Zinnoctoat |
| 51,2 Gew.-Teile | Desmodur® T 65 |

wurden intensiv gemischt und zu einem Schaumstoffblock verschäumt. Es resultierte ein rißfreier Schaumstoff mit regelmäßiger Zellstruktur.

### Beispiel 11

In einer Rezeptur zur Erzielung superweicher Qualitäten wurde der Polyether aus dem Beispiel 5 als Abmischung mit einem aktiven konventionellen Polyether verschäumt:

| | |
|---|---|
| 75 Gew.-Teile | des Polyethers aus Beispiel 5 |
| 25 Gew.-Teile | eines trifunktionellen Polyethers mit einer OH-Zahl von 35 mg KOH/g und primären OH-Gruppen > 80 mol% (Desmophen® 3900 I, Bayer AG) |
| 3,50 Gew.-Teile | Wasser |
| 0,8 Gew.-Teile | Silikonstabilisator (OS® 15, Th. Goldschmidt AG, D-45127 Essen) |
| 0,7 Gew.-Teile | DMEA |
| 0,25 Gew.-Teile | Amin-Katalysator (Katalysator 33LV der Fa. Air Products GmbH, D-45527 Hattingen) |
| 2,0 Gew.-Teile | TCPP (Trichlorpropylphosphat) |
| 45,4 Gew.-T.eile | Desmodur® T 80 |

wurden intensiv gemischt und zu einem Schaumstoffblock verschäumt. Es resultierte ein sehrweichelastischer rißfreier Schaumstoff mit regelmäßiger Zellstruktur.

### Beispiel 12

| | |
|---|---|
| 100 Gew.-Teile | des Polyethers aus Beispiel 2 |
| 3,0 Gew.-Teile | Wasser |
| 0,8 Gew.-Teile | Silikonstabilisator (OS® 22, Th. Goldschmidt AG, D-45127 Essen) |
| 0,1 Gew.-Teile | DMEA |
| 0,05 Gew.-Teile | Amin-Katalysator (Niax® Al, Fa. Witco Osi) |
| 0,18 Gew.-Teile | Zinnoctoat |
| 40,5 Gew.-Teile | Desmodur® T 80 |

wurden intensiv gemischt und zu einem Schaumstoffblock verschäumt. Es resultierte ein rißfreier Schaumstoff.

### Vergleichsbeispiel 13 (Kaltfreischaum)

| Rezeptur: | |
|---|---|
| 50,0 Gew.-Teile | des Polyethers aus Vergleichsbeispiel 1 |
| 50,0 Gew.-Teile | eines trifunktionellen Polyethers mit einer OH-Zahl von 28 mg KOH/g und > 80 mol% primären OH-Gruppen (Desmophen® VP PU 10WF22, Bayer AG) |
| 3,6 Gew.-Teile | Wasser |
| 0,15 Gew.-Teile | Amin-Katalysator (Niax® Al, Fa. Witco Osi) |
| 0,4 Gew.-Teile | Amin-Katalysator (Katalysator 33LV der Fa. Air Products GmbH, D-45527 Hattingen) |
| 1,25 Gew.-Teile | Diethanolamin |
| 0,50 Gew.-Teile | Silikonstabilisator (Tegostab® B 8708, Th. Goldschmidt AG, D-45127 Essen) |
| 62,8 Gew.-Teile | hochmonomerhaltiges 4,4'-Diphenylmethandiisocyanat mit Polymeranteilen und einem NCO-Gehalt von 32,3 Gew.-% (VP PU Desmodur® 3230, Bayer AG) |

Es wurde ein Freischaum in guter Qualität erhalten.

### Beispiel 14 (Heißformschaum)

| Rezeptur: | |
|---|---|
| 100,0 Gew.-Teile | des Polyethers aus Beispiel 2 |
| 3,5 Gew.-Teile | Wasser |
| 0,05 Gew.-Teile | Zinnoctoat |
| 0,15 Gew.-Teile | Amin-Katalysator (Niax® Al, Fa. Witco Osi) |
| 1,0 Gew.-Teile | Silikonstabilisator (Tegostab® B 4900, Th. Goldschmidt AG, D-45127 Essen) |
| 62,8 Gew.-Teile | Desmodur® T 80 |

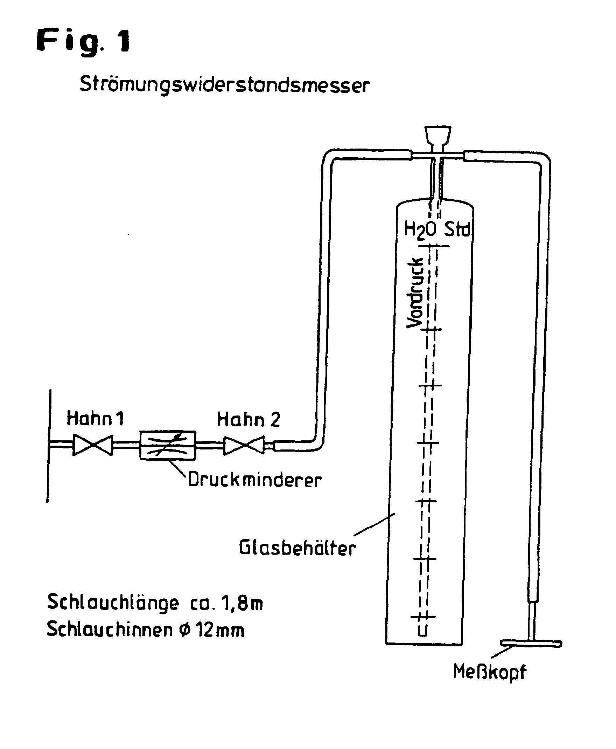

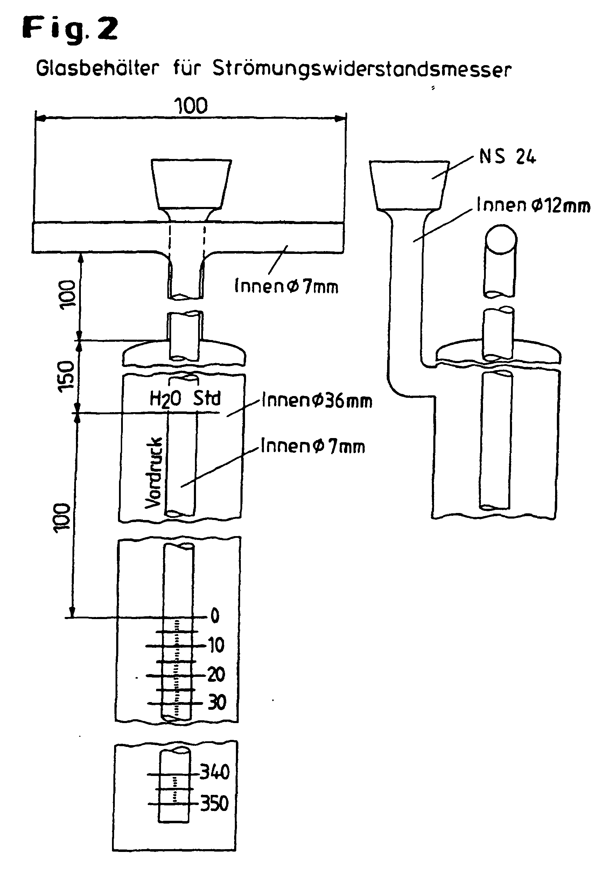

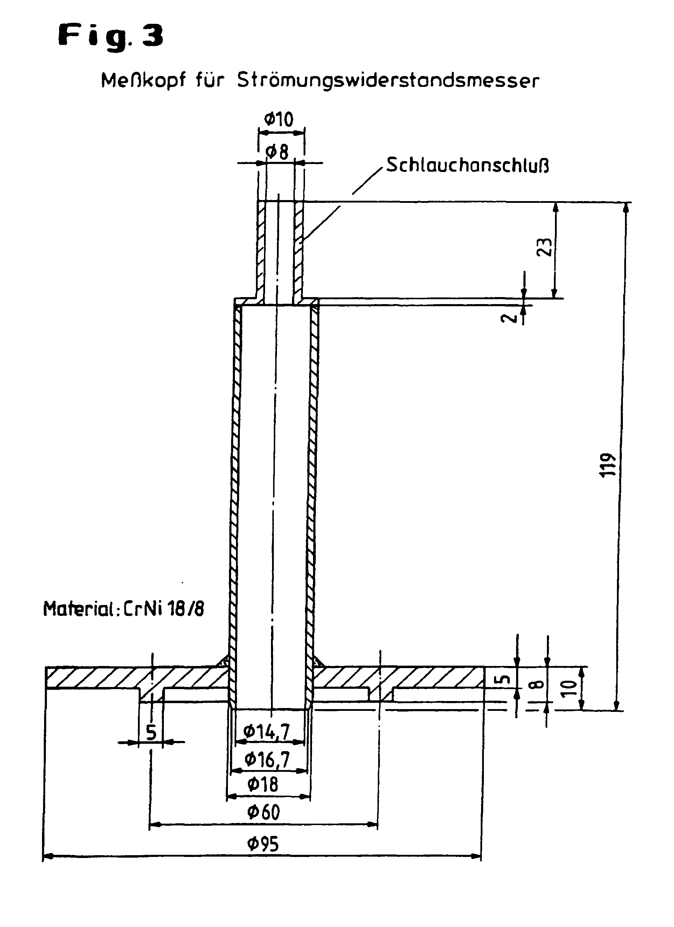

Es wurde ein Formschaumstoff in guter Qualität erhalten. Zur Ermittlung der Luftdurchlässigkeit des Schaums wurde dessen Strömungswiderstand gegenüber einem Luftstrom mit der in Fig. 1-3 abgebildeten Apparatur ermittelt.

Die Apparatur besteht aus einem mit einer Millimetereinteilung von 0 bis 350 versehenen Glaszylinder, dessen Innendurchmesser 36 mm beträgt, und einem Innenrohrvon 7 mm lichter Weite. Dieses Innenrohr endet oben in einem T-Stück, an das an der einen Seite die Luftzufuhr und an der anderen Seite der Schlauch mit dem Meßkopf angeschlossen wird. Der Schlauch für den Meßkopf besitzt einen Innendurchmesser von 12 mm und eine Länge von 1,80 m. Der Glaszylinder ist nach unten geschlossen und kann über den nach hinten angebrachten Trichter mit Wasser gefüllt werden. Das Prüfgerät wird über zwei Hähne, einen Druckminderer und einen Schlauch von beliebiger Länge und beliebigem Durchmesser an eine Druckluftquelle angeschlossen, wobei der Druckminderer auf ca. 2,0 bar eingestellt wird. Der Glasbehälter wird mit destilliertem Wasser befüllt, bis der untere Meniskusrand die H₂O-Std.-Marke erreicht. Dann wird Hahn 1 aufgedreht und die Strömungsgeschwindigkeit am Hahn 2 so lange verändert, bis der untere Meniskusrand der Innensäule die 0 mm-Marke erreicht und damit ein Vordruck von 100 mm Wassersäule eingestellt ist. Nach der Einstellung des Vordrucks wird der Meßkopf ohne Druck auf die Probe gesetzt und es wird die sich im Innenrohr einstellende Höhe der Wassersäule abgelesen. Diese ist gleich dem Strömungswiderstand der Probe.

Es wurden folgende Werte ermittelt: Strömungswiderstand des Schaumkems: 100 mm Wassersäule; Strömungswiderstand des Schaums mit Haut: 300 mm Wassersäule.

### Vergleichsbeispiel 15 (Heißformschaum)

| Rezeptur | |
|---|---|
| 100,0 Gew.-Teile | des Polyethers aus Vergleichsbeispiel 1 |
| 3,5 Gew.-Teile | Wasser |
| 0,15 Gew.-Teile | Amin-Katalysator (Niax® Al, Fa. Witco Osi) |
| 0,10 Gew.-Teile | Zinnoctoat |
| 0,50 Gew.-Teile | Silikonstabilisator (Tegostab® B 4900, Th. Goldschmidt AG, D-45127 Essen) |
| 40,6 Gew.-Teile | ® Desmodur T 80 |

Es wurde ein Formschaumstoff in guter Qualität erhalten. Der Strömungswiderstand der Probe wurde nach dem in Beispiel 12 beschriebenen Verfahren ermittelt. Es wurden folgende Werte gemessen: Strömungswiderstand des Schaumkems: 50 mm Wassersäule; Strömungswiderstand des Schaums mit Haut: 160 mm Wassersäule.

### Vergleichsbeispiel 16 (Heißformschaum)

| | |
|---|---|
| 30,0 Gew.-Teile | des Polyethers aus Beispiel 1 |
| 70,0 Gew.-Teile | Desmophen® 3426 L |
| 3,5 Gew.-Teile | Wasser |
| 0,09 Gew.-Teile | Zinnoctoat |
| 1,00 Gew.-Teile | Silikonstabilisator (Tegostab® B 4900, Th. Goldschmidt AG, D-45127 Essen) |
| 40,6 Gew.-Teile | Desmodur® T 80 |

Es wurde ein Formschaumstoff in guter Qualität erhalten.

## Patentansprüche

1. Polyurethan-Weichschaum, erhältlich durch Umsetzung von Polylsocyanaten und durch Doppelmetallcyanid-Katalyse (DMC-Katalyse) hergestellten Polyetherpolyolen, die mindestens einen Ethylenoxid-Propylenoxid-Mischblock aufweisen und ein zahlenmittleres Molekulargewicht zwischen 700 und 50.000 g/mol besitzen, **dadurch gekennzeichnet, dass** zu seiner Herstellung ein durch DMC-Katalyse hergestelltes Polyetherpolyol eingesetzt wird, an das nach einem Ethylenoxid-Propylenoxid-Mischblock ein endständiger Propylenoxid-Block addiert wurde.

2. Polyurethan-Weichschaum gemäß Anspruch 1, **dadurch gekennzeichnet, dass** es sich um einen Heißformschaum handelt.

3. Polyurethan-Weichschaum gemäß Anspruch 1, **dadurch gekennzeichnet, dass** es sich um einen Blockschaum handelt.

4. Polyurethan-Blockschaum gemäß Anspruch 3, **dadurch gekennzeichnet, dass** die Ethylenoxid-Propylenoxid-Mischblöcke des zu seiner Herstellung eingesetzten durch DMC-Katalyse hergestellten Polyetherpolyols zu mindestens 50 mol% aus Polyoxypropylenoxid-Einheiten besteht.

5. Polyurethan-Weichschaum, erhältlich durch Umsetzung von Polyisocyanaten und durch Doppelmetallcyanid-Katalyse (DMC-Katalyse) ohne Abtrennung des Katalysators hergestellten Polyetherpolyolen, die mindestens einen Ethylenoxid-Propylenoxid-Mischblock aufweisen und ein zahlenmittleres Molekulargewicht zwischen 700 und 50.000 g/mol besitzen, **dadurch gekennzeichnet, dass** zu seiner Herstellung ein durch DMC-Katalyse hergestelltes Polyetherpolyol eingesetzt wird, das einen terminalen EO/PO-Mischblock und einen Anteil primärer OH-Gruppen von mehr als 50 mol% aufweist.

6. Polyurethan-Weichschaum gemäß Anspruch 5, **dadurch gekennzeichnet, dass** es sich um einen Kaltformschaum handelt.

7. Polyurethan-Weichschaum gemäß Anspruch 5, **dadurch gekennzeichnet, dass** es sich um einen Blockschaum handelt.

## Claims

1. Polyurethane flexible foam obtainable by reacting polyisocyanates with polyether polyols produced by double metal cyanide catalysis (DMC catalysis), the polyether polyols comprising at least one ethylene oxide/propylene oxide mixed block and having a number average molecular weight between 700 and 50,000 g/mole, **characterised in that** for the production of the polyurethane flexible foam a polyether polyol produced by DMC catalysis is employed, to which a terminal propylene oxide block was added after an ethylene oxide/propylene oxide mixed block.

2. Polyurethane flexible foam according to claim 1, **characterised in that** it is a hot-cured moulded foam.

3. Polyurethane flexible foam according to claim 1, **characterised in that** it is a slabstock foam.

4. Polyurethane slabstock foam according to claim 3, **characterised in that** the ethylene oxide/propylene oxide mixed blocks of the polyether polyol used for its preparation and produced by DMC catalysis consist in an amount of at least 50 mole % of polyoxypropylene oxide units.

5. Polyurethane flexible foam obtainable by reacting polyisocyanates with polyether polyols produced by double metal cyanide catalysis (DMC catalysis) without separation of the catalyst, the polyether polyols comprising at least one ethylene oxide/propylene oxide mixed block and having a number average molecular weight between 700 and 50,000 g/mole, **characterised in that** for the production of the polyurethane flexible foam a polyether polyol produced by DMC catalysis is used, that comprises a terminal EO/PO mixed block and a proportion of primary OH groups of more than 50 mole %.

6. Polyurethane flexible foam according to claim 5, **characterised in that** it is a cold-cured foam.

7. Polyurethane flexible foam according to claim 5, **characterised in that** it is a slabstock foam.

## Revendications

1. Mousse souple de polyuréthane obtenue en faisant réagir des polyisocyanates et des polyéther-polyols préparés par catalyse de cyanure bimétallique (catalyse DMC), qui présentent au moins un bloc mixte d'oxyde d'éthylène et d'oxyde de propylène et qui possèdent un poids moléculaire moyen en nombre compris entre 700 et 50 000 g/mol, **caractérisée en ce que** l'on utilise pour sa production un polyéther-polyol préparé par catalyse DMC, sur lequel un bloc d'oxyde de propylène terminal a été ajouté après un bloc mixte d'oxyde d'éthylène et d'oxyde de propylène.

2. Mousse souple de polyuréthane selon la revendication 1, **caractérisée en ce qu'**il s'agit d'une mousse formée à chaud.

3. Mousse souple de polyuréthane selon la revendication 1, **caractérisée en ce qu'**il s'agit d'une mousse en bloc.

4. Mousse en bloc de polyuréthane selon la revendication 3, **caractérisée en ce que** les blocs mixtes d'oxyde d'éthylène et d'oxyde de propylène du polyéther-polyol préparé par catalyse DMC, utilisé pour sa production, sont constitués à au moins 50 % en mole d'unités d'oxyde de polyoxypropylène.

5. Mousse souple de polyuréthane, obtenue en faisant réagir des polyisocyanates et des polyéther-polyols préparés par catalyse de cyanure bimétallique (catalyse DMC) sans séparation du catalyseur, qui présentent au moins un bloc mixte d'oxyde d'éthylène et d'oxyde de propylène et qui possèdent un poids moléculaire moyen en nombre compris entre 700 et 50 000 g/mole, **caractérisée en ce que** l'on utilise pour sa production un polyéther-polyol préparé par catalyse DMC, qui présente un bloc mixte EO/PO terminal et une proportion de groupes OH primaires supérieure à 50 % en mole.

6. Mousse souple de polyuréthane selon la revendication 5, **caractérisée en ce qu'**il s'agit d'une mousse formée à froid.

7. Mousse souple de polyuréthane selon la revendication 5, **caractérisée en ce qu'**il s'agit d'une mousse en bloc.
